# EUROPEAN PATENT SPECIFICATION

(11) **EP 3 878 720 B1**
(45) Date of publication and mention of the grant of the patent: **11.05.2022**
(21) Application number: 20305244.4
(22) Date of filing: 09.03.2020
(51) Int. Cl.: B62D 49/06

(54) **IMPROVED WHEEL WEIGHT STRUCTURE FOR A WORK VEHICLE**
VERBESSERTE RADGEWICHTSSTRUKTUR FÜR EIN ARBEITSFAHRZEUG
STRUCTURE DE POIDS DE ROUE AMÉLIORÉE POUR UN VÉHICULE DE TRAVAIL

(43) Date of publication of application: 15.09.2021
(73) Proprietor: Kubota Corporation, Osaka-shi, Osaka 556-8601 (JP)
(72) Inventor: CHAUVEL, Guillaume, 95101 Argenteuil Cedex (FR)
(74) Representative: Cabinet Beau de Loménie

(56) References cited:
- EP-A1- 3 409 502
- DE-A1-102014 202 074
- KR-A- 20170 084 728

## Description

### TECHNICAL FIELD

The present disclosure related to the field of wheel weights for work vehicles, for instance such as tractors.

### BACKGROUND ART

The design of wheel for work vehicles requires the design of appropriate wheel weight to ensure a proper balance of the vehicle during various operations.

To ensure a proper assembly of the wheel weights, they are usually either integrated within the wheel rims, or fixed to specific portions of the wheel rims. Document EP 3 409 502 A1 for example discloses a vehicle wheel structure according to the preamble of claim 1.

However, the design of such wheel weight is complex. In addition, new regulations tend to increase the speed that work vehicles such as tractors can reach on the road, for instance up to 50 Km/h or up to 65 Km/h depending on the areas. This increase in the speed limit now leads to new issues in relation to the wheel weights, which are usually designed for lower displacement speeds.

The present disclosure aims at addressing at least partially these issues.

### PRESENTATION OF THE INVENTION

This object is achieved by a vehicle wheel structure exhibiting the features characterised in independent claim 1. The present invention relates to a vehicle wheel structure, comprising a vehicle axle extending from a vehicle frame, said vehicle axle comprising a fixed portion which is fixed with respect to the vehicle frame, and a mobile portion which is mobile with respect to the vehicle frame, wherein the fixed portion defines a wheel axis, and the mobile portion is configured to rotate around said wheel axis, the mobile portion comprising a shaft transmission part on which is arranged a wheel rim, said shaft transmission part being rotatable around the wheel axis, the fixed part comprising a support part, which extends beyond the shaft transmission part along the wheel axis, said support part comprising a wheel weight receiving portion which supports a wheel weight, such that the wheel weight is arranged on the wheel axis and is static with respect to the vehicle frame, and the wheel rim is arranged between the wheel weight and the vehicle frame.

According to an example embodiment, the wheel weight is configured to fit within an inner volume of the wheel rim.

According to an example embodiment, the wheel weight presents a through hole, the support part is arranged within said through hole, and the wheel weight is fixed in position by a plate arranged at a free end of the support part, said plate being screwed to the support part.

The support part can comprise an abutment, so that the wheel weight is arranged between said abutment on one hand, and the plate on the other hand, so that the wheel weight is fixed in translation along the wheel axis.

The support part can present a shape that is not a revolution shape around the wheel axis, and wherein said through hole presents a shape identical to that of the support part.

The vehicle wheel structure as per the present disclosure can be applied to a work vehicle, for instance to a tractor. The present disclosure therefore also related to a work vehicle, for instance a tractor, that comprises such a vehicle wheel structure.

### BRIEF PRESENTATION OF THE DRAWINGS

Other features, aims and advantages of the invention will be detailed in the following description, which is purely illustrative and should not be interpreted in a limiting way, and which should be read in view of the enclosed drawings, wherein:

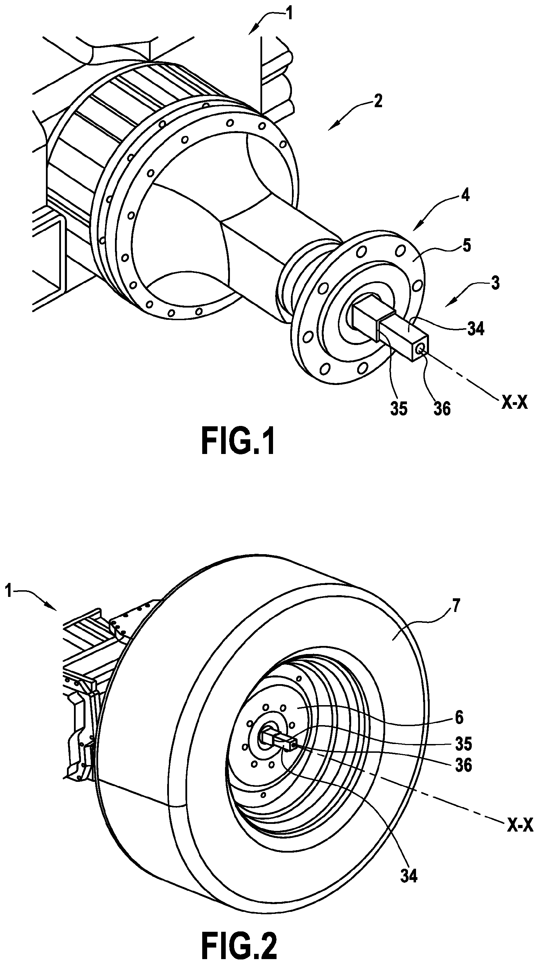

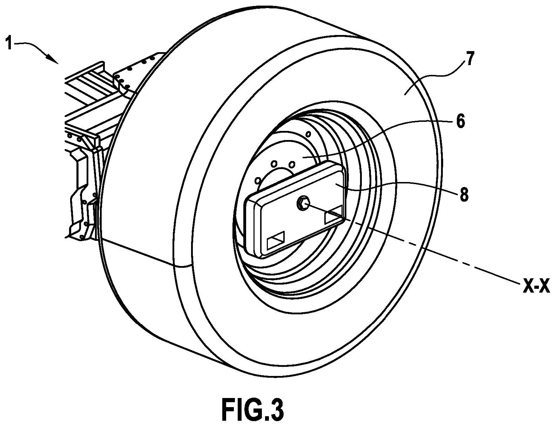

Figures 1, 2 and 3 present a vehicle wheel structure according to an aspect of the present disclosure.

In the various drawings, elements in common are designated by identical numeral references.

### DETAILED DESCRIPTION

Figures 1, 2 and 3 present different views of a vehicle wheel structure according to an aspect of the present disclosure.

These figures represent different views that show the structure of the components of an example embodiment of the present disclosure. Components are progressively added from figure 1 to figure 3 to illustrate the structure.

The figures represent a wheel structure for a vehicle, comprising a vehicle frame 1 from which the wheel structure extends.

The vehicle wheel structure comprises a vehicle axle 2 that extends from the vehicle frame 1. The vehicle axle 2 comprises a fixed portion 3 and a mobile portion 4.

The fixed portion 3 defines a wheel axis X-X, is fixed to the vehicle frame 1 and is immobile with respect to the vehicle frame 1.

The mobile portion 4 is configured to rotate around the wheel axis X-X with respect to the vehicle frame 1.

Different components of the structure are part of the fixed portion 3 or of the mobile portion 4. For instance, if the wheel structure includes a wheel engine for instance such as a hydraulic engine, then a fixed part of the wheel engine is part of the fixed portion 3, while a mobile part of the hydraulic engine is part of the mobile portion 4.

The mobile portion 4 comprises a shaft transmission part 5, which defines a support for a wheel rim 6. The wheel rim 6 is assembled to the shaft transmission part 5, for instance with bolts, which ensure that the wheel rim 6 can rotate around the wheel axis X-X. The wheel rim 6 supports a tire 7. The shaft transmission part 5 can for instance be coupled to a shaft that provides a torque to rotate the wheel in case of a drive wheel, or coupled to the fixed portion 3 by rotating means such as a bearing in case of a free wheel.

The fixed portion 3 further comprises a support part 34, which extends beyond the shaft transmission part 5 along the wheel axis X-X, so as to protrude on an outside side of the transmission part 5, which means on a side of the transmission part 5 that is on the opposite side from the vehicle frame 1. This support part 34 extends along the wheel axis X-X, and is fixed with respect to the frame. The support part 34 defines a weight receiving portion adapted to support a wheel weight. 8.

The wheel weight 8 is assembled on the support part 34, so as to be located at an outer end of the vehicle axle. The wheel weight 8 is therefore arranged along the wheel axis X-X, and is fixed with respect to the vehicle frame 1.

The wheel weight 8 is therefore not a mobile part of the vehicle when the vehicle moves. This addresses the issues related to the rotation of the wheel weight that are present in the common wheel weight structures. Indeed, having a wheel weight which is fixed with respect to the vehicle frame prevents the risks associated with the rotation of the wheel weight in the case where the vehicle moves at a relatively high speed.

In addition, having the wheel weight 8 located at a free end of the vehicle axle provides an easy access to the wheel weight 8 for maintenance operations, or when a user wishes to remove or change the wheel weight 8. The installation or the removal of the wheel weight can be done either manually or with a handling tool, depending for instance on the weight of the wheel weight.

The support part 34 typically presents a shape that is not a shape of revolution around the wheel axis X-X. In the illustrated embodiment, the support part 34 presents a square section. The wheel weight 8 presents a through hole whose shape corresponds to that of the support part 34, so that the support part 34 can be inserted within said through hole of the wheel weight 8.

The support part 34 typically comprises an abutment 35, adapted to restrain the displacement of the wheel weight 8 along the wheel axis X-X along a first direction. The displacement of the wheel weight 8 along the wheel axis X-X a second direction opposite to the first direction can for instance be made by using a plate that is assembled at the free end of the support part 34, for instance with a bolt that is inserted in a screw hole 36 arranged at a free end of the support part 34.

The wheel weight 8 is typically arranged within an inner volume of the wheel rim 6.

The shape and size of the wheel weight 8 can be modified as long as it fits within the inner diameter of the wheel rim 6.

In addition to the advantages already described, the present disclosure also presents the following benefits. Having the wheel weight 8 fixed with respect to the vehicle frame 1 causes no kinetic energy to be generated by the rotation of the wheel weight.

This therefore negates all the disadvantages associated to such kinetic energy, such as a negative impact on the durability of the work vehicle, and also the risks associated with a potential failure of the link of the wheel weight which would turn the wheel weight into a projectile with a high kinetic energy. The present disclosure prevents such risks.

Furthermore, by using a static wheel weight instead of a rotating wheel weight, the balancing process of wheels can be simplified, which therefore significantly simplifies the design of the work vehicle, and has a positive effect on the design costs. In addition, due to the nonrequirement of a balancing process, the replacement of the wheel weight is drastically simplified.

## Claims

1. A vehicle wheel structure, comprising a vehicle axle (2) extending from a vehicle frame (1), said vehicle axle (2) comprising a fixed portion (3) which is fixed with respect to the vehicle frame (1), and a mobile portion (4) which is mobile with respect to the vehicle frame (1), wherein the fixed portion (3) defines a wheel axis (X-X), and the mobile portion (4) is configured to rotate around said wheel axis (X-X),
the mobile portion (4) comprising a shaft transmission part (5) on which is arranged a wheel rim (6), said shaft transmission part (5) being rotatable around the wheel axis (X-X), the vehicle wheel structure being **characterised in that**
the fixed part (3) comprises a support part (34), which extends beyond the shaft transmission part (5) along the wheel axis (X-X), said support part (34) comprises a wheel weight receiving portion
which supports a wheel weight (8), such that the wheel weight (8) is arranged on the wheel axis (X-X) and is static with respect to the vehicle frame (1), and the wheel rim (6) is arranged between the wheel weight (8) and the vehicle frame (1).

2. The vehicle wheel structure according to claim 1, wherein the wheel weight (8) is configured to fit within an inner volume of the wheel rim (6).

3. The vehicle wheel structure according to claim 1 or claim 2, wherein the wheel weight (8) presents a through hole, the support part (34) is arranged within said through hole, and the wheel weight (8) is fixed in position by a plate arranged at a free end of the support part (34), said plate being screwed to the support part (34).

4. The vehicle wheel structure according to claim 3, wherein the support part (34) comprises an abutment (35), so that the wheel weight (8) is arranged between said abutment (35) on one hand, and the plate on the other hand, so that the wheel weight (8) is fixed in translation along the wheel axis (X-X).

5. The vehicle wheel structure according to any one of claims 3 or 4, wherein the support part (34) presents a shape that is not a revolution shape around the wheel axis (X-X), and wherein said through hole presents a shape identical to that of the support part (34).

6. A tractor comprising a vehicle wheel structure according to any one of claims 1 to 5.

## Patentansprüche

1. Fahrzeugradstruktur, die eine Fahrzeugachse (2) umfasst, die sich von einem Fahrzeugrahmen (1) erstreckt, wobei die Fahrzeugachse (2) einen festen Abschnitt (3), der in Bezug auf den Fahrzeugrahmen (1) fest ist, und einen beweglichen Abschnitt (4) umfasst, der in Bezug auf den Fahrzeugrahmen (1) beweglich ist, wobei der feste Abschnitt (3) eine Radachse (X-X) definiert und der bewegliche Abschnitt (4) dazu konfiguriert ist, sich um die Radachse (X-X) zu drehen,
der bewegliche Abschnitt (4) einen Wellenübertragungsteil (5) umfasst, auf dem eine Radfelge (6) angeordnet ist, wobei der Wellenübertragungsteil (5) um die Radachse (X-X) drehbar ist,
die Fahrzeugradstruktur **dadurch gekennzeichnet ist, dass**
der feststehende Abschnitt (3) ein Trägerteil (34) umfasst, das sich über den Wellenübertragungsteil (5) entlang der Radachse (X-X) erstreckt,
das Trägerteil (34) einen Radgewichtsaufnahmeabschnitt umfasst, der ein Radgewicht (8) trägt, so dass das Radgewicht (8) auf der Radachse (X-X) angeordnet ist und in Bezug auf den Fahrzeugrahmen (1) statisch ist, und so, dass die Felge (6) zwischen dem Radgewicht (8) und dem Fahrzeugrahmen (1) angeordnet ist.

2. Fahrzeugradstruktur nach Anspruch 1, wobei das Radgewicht (8) dazu ausgestaltet ist, in ein Innenvolumen der Radfelge (6) zu passen.

3. Fahrzeugradstruktur nach Anspruch 1 oder 2, wobei das Radgewicht (8) ein Durchgangsloch aufweist, das Trägerteil (34) innerhalb des Durchgangslochs angeordnet ist und das Radgewicht (8) durch eine an einem freien Ende des Trägerteils (34) angeordnete Platte in seiner Position fixiert ist, wobei die Platte mit dem Trägerteil (34) verschraubt ist.

4. Fahrzeugradstruktur nach Anspruch 3, wobei das Trägerteil (34) einen Anschlag (35) aufweist, so dass das Radgewicht (8) zwischen dem Anschlag (35) einerseits und der Platte andererseits angeordnet ist, so dass das Radgewicht (8) entlang der Radachse (X-X) gegen Translation fixiert ist.

5. Fahrzeugradstruktur nach einem der Ansprüche 3 oder 4,
wobei das Trägerteil (34) eine Form aufweist, die keine Rotationsform um die Radachse (X-X) ist, und
wobei das Durchgangsloch eine Form aufweist, die mit der des Trägerteils (34) identisch ist.

6. Traktor mit einer Fahrzeugradstruktur nach einem der Ansprüche 1 bis 5.

## Revendications

1. Structure de roue de véhicule comprenant un essieu de véhicule (2) s'étendant à partir d'un châssis de véhicule (1), ledit essieu de véhicule (2) comprenant une partie fixe (3) qui est fixe par rapport au châssis de véhicule (1), et une partie mobile (4) qui est mobile par rapport au châssis de véhicule (1), dans laquelle la partie fixe (3) définit un axe de roue (X-X), et la partie mobile (4) est configurée pour tourner autour dudit axe de roue (X-X),
la partie mobile (4) comprenant une partie de transmission d'arbre (5) sur laquelle est agencée une jante (6), ladite partie de transmission d'arbre (5) pouvant tourner autour de l'axe de roue (X-X),
la structure de roue de véhicule étant **caractérisée en ce que** :
la partie fixe (3) comprend une partie de support (34) qui s'étend au-delà de la partie de transmission d'arbre (5) le long de l'axe de roue (X-X), ladite partie de support (34) comprend une partie de réception de masse d'équilibrage qui supporte une masse d'équilibrage (8), de sorte que la masse d'équilibrage (8) est agencée sur l'axe de roue (X-X) et est statique par rapport au châssis de véhicule (1), et la jante (6) est agencée entre la masse d'équilibrage (8) et le châssis de véhicule (1).

2. Structure de roue de véhicule selon la revendication 1, dans laquelle la masse d'équilibrage (8) est configurée pour se monter dans un volume interne de la jante (6).

3. Structure de roue de véhicule selon la revendication 1 ou la revendication 2, dans lequel la masse d'équilibrage (8) présente un trou débouchant, la partie de support (34) est agencée dans ledit trou débouchant, et la masse d'équilibrage (8) est fixée en position par une plaque agencée au niveau d'une extrémité libre de la partie de support (34), ladite plaque étant vissée sur la partie de support (34).

4. Structure de roue de véhicule selon la revendication 3, dans laquelle la partie de support (34) comprend une butée (35), de sorte que la masse d'équilibrage (8) est agencée entre ladite butée (35) d'une part, et la plaque d'autre part, de sorte que la masse d'équilibrage (8) est fixée en translation le long de l'axe de roue (X-X).

5. Structure de roue de véhicule selon l'une quelconque des revendications 3 ou 4, dans laquelle la partie de support (34) présente une forme qui n'est pas une forme de révolution autour de l'axe de roue (X-X), et dans laquelle ledit trou débouchant présente une forme identique à celle de la partie de support (34).

6. Tracteur comprenant une structure de roue de véhicule selon l'une quelconque des revendications 1 à 5.
